Europäisches Patentamt

European Patent Office

Office européen des brevets

(19)

(11) Veröffentlichungsnummer: **0 057 770**
**B1**

(12) # EUROPÄISCHE PATENTSCHRIFT

(45) Veröffentlichungstag der Patentschrift:
19.06.85

(51) int. Cl.⁴: **G 01 N 1/00, B 65 B 69/00**

(21) Anmeldenummer: 81110476.9

(22) Anmeldetag: 16.12.81

(54) **Vorrichtung zur Behandlung von heissen Metall-, insbesondere Stahlproben.**

(30) Priorität: 04.02.81 DE 3103695

(43) Veröffentlichungstag der Anmeldung:
18.08.82 Patentblatt 82/33

(45) Bekanntmachung des Hinweises auf die Patenterteilung:
19.06.85 Patentblatt 85/25

(84) Benannte Vertragsstaaten:
AT BE FR GB IT LU NL SE

(56) Entgegenhaltungen:
DE - A - 2 521 833
FR - A - 2 249 002
FR - A - 2 367 537
GB - A - 2 014 728
US - A - 3 487 965

(73) Patentinhaber: MANNESMANN Aktiengesellschaft,
Mannesmannufer 2, D-4000 Düsseldorf 1 (DE)

(72) Erfinder: Scherff, Helmut, Geldernschestrasse 305a,
D-4133 Neukirchen-Vluyn (DE)

BUNDESDRUCKEREI BERLIN

## Beschreibung

Die Erfindung betrifft eine Vorrichtung zur Behandlung von heißen Metall-, insbesondere Stahlproben, die mittels eines Manipulators von der Spitze einer Sondenlanze abtrennbar, über eine Rohrpostanlage transportierbar und mechanisch aus ihren Umhüllungen lösbar sind.

Eine derartige Vorrichtung ergänzt die in der Metallurgie eingesetzten Temperaturmeßlanzeneinrichtungen bzw. Probenlanzeneinrichtungen. Die mit diesen Einrichtungen gezogenen Metallproben befinden sich in der Spitze der Sonde und werden mittels des Manipulators von der Sondenspitze im Bereich der Ofenbühne abgetrennt. Die Länge solcher Proben beträgt ca. 150 bis 200 mm. Die Proben werden daraufhin in das Werkstoff-Laboratorium gebracht und bezüglich ihrer chemischen Zusammensetzung analysiert. Das Ergebnis der Anlyse ist für den Fortgang des metallurgischen Erschmelzungsverfahrens von vorrangiger Bedeutung. Die Analysierung der Proben ist daher in einem kürzestmöglichen Zeitraum durchzuführen.

Es ist bekannt, nach der mechanischen Abtrennung der Proben diese in das Laboratorium über eine Rohrpostanlage (DE-A-2 521 833) zu transportieren und dort unter erheblichem Aufwand von den Umhüllungen zu trennen, wobei stets das Risiko einer Verletzung des Personals besteht.

Es ist auch bereits vorgeschlagen worden (GB-A-2 014 728), an ein Sondenmagazin eine Trennstation für die Sondenlanze und die Sonde anzuschließen, wobei an die Sondenstation ein Entsorgungsrohr angeschlossen ist, in dem die Probe transportiert wird. Der bekannte Vorschlag enthält jedoch ebenfals keine Lösung für das Problem, die Sonde von ihrer Umhüllung zu befreien, um die Stahlprobe dem Laboratoriums-Personal ohne Gefahrenmomente zugänglich zu machen.

Der Erfindung liegt die Aufgabe zugrunde, die Gefahren für das Personal bei der Behandlung heißer Metall-, insbesondere Stahlproben zwischen dem Probenahmeort und dem Analysen-Laboratorium zu vermeiden und die Durchführung der Analyse insgesamt zu beschleunigen.

Die gestellte Aufgabe wird erfindungsgemäß dadurch gelöst, daß die Proben über die Rohrpostanlage einer Auspackvorrichtung zuführbar sind, die mit einem Ausgang für die ausgepackten Metallprobenkörper und mit einem weiteren, getrennten Ausgang für eine oder mehrere der Umhüllungen versehen ist. Nach Übergabe der noch heißen Proben, die von einer Keramik-Kokille und von einem Papprohr umgeben sind, an die Rohrpostanlage ist eine Verletzungsgefahr für das Personal ausgeschlossen. Zudem wird der Transport in das Laboratorium und das Entfernen der Umhüllungen beschleunigt. Die Erfindung erleichtert außerdem Trennung und Abtransport der unbrauchbaren Umhüllungen.

Vorteilhafterweise ist in der Auspackvorrichtung am Eingang ein Probenfänger angeordnet.

Der mit hoher Geschwindigkeit ankommende Metallprobenkörper wird dadurch gefahrlos abgebremst.

Weiterhin ist vorgesehen, daß in der Auspackvorrichtung dem Probenfänger eine Ausstoßvorrichtung mit einem Stößel zugeordnet ist, wobei der Stößel den Probenfänger zentrisch durchdringt. Der Stößel gestattet folglich die Trennung des Papprohrs von der Keramik-Kokille.

Das eingangs erwähnte Auseinanderführen der Probe auf einer Linie und der Umhüllungen auf einer anderen Linie gestattet nach einem anderen Merkmal, daß der Probenfänger aus zwei Gehäusehälften gebildet ist, die jeweils schwenkbar gelagert sind und die in ihrer aufgeklappten Stellung mit ihrer großen Öffnungsweite dem Ausgang gegenüberliegen. Somit können die Papprohre oder deren Reste ebenfalls auf einfache Art abgeführt werden.

Eine andere Ausgestaltung der Erfindung besteht darin, daß in der Auspackvorrichtung dem Probenfänger eine Brechvorrichtung nachgeschaltet ist. Die Brechvorrichtung gestattet, nach Entfernen des Papprohr den Metallprobenkörper aus der Keramik-Kokille zu lösen.

Die kontinuierliche Behandlungslinie für die Proben kann auch für das Entfernen der Keramik-Kokille, die den Metallprobenkörper umgibt, beibehalten werden, indem die Brechvorrichtung aus einer ortsfesten Kanalhälfte und aus einer bzw. aus mehreren gegen die Längsseiten der Proben bewegbaren Brecherbacken in Form sich gegenüberliegender Kanalhälften gebildet ist.

Die gebrochenen Teile der Keramik-Kokille können ebenfalls durch einfache Maßnahmen entfernt werden, ohne den weiteren Betrieb zu stören. Hierzu ist vorgesehen, daß eine untere Kanalhälfte der Brechvorrichtung schwenkbar ist und bis in eine Freigabestellung schwenkbar ist und daß an den Bereich der Freigabestellung am Ausgang der Auspackvorrichtung ein Auffangkonus mit an diesem anschließenden Abführrohr angeordnet ist. Die gebrochenen Teile der Keramik-Kokille werden daher automatisch entfernt.

Das System der Behandlungslinien für den Metallprobenkörper und für die Umhüllungen gestattet nach einem weiteren Merkmal der Erfindung, daß der Ausgaberaum der Brechvorrichtung gleichzeitig den Ausgang der Auspackvorrichtung bildet.

Dabei kann das unkontrollierte Herausfallen der ausgepackten Metallprobenkörper aus der Vorrichtung dadurch verhindert werden, indem der Ausgang der Auspackvorrichtung mit einer Auffangklappe versehen ist.

Die erfindungsgemäße Vorrichtung sichert eine zentrale Behandlung aller Proben von örtlich entferntliegenden Probenahmestellen. Zu diesem Zweck ist vorgesehen, daß die Rohrpostanlage mittels eines oder mehrerer Rohre an die Auspackvorrichtung angeschlossen ist, wobei die Rohre jeweils im Probenfänger münden.

Ein Ausführungsbeispiel der Erfindung ist in der Zeichnung dargestellt und wird im folgenden näher beschrieben. Es zeigt

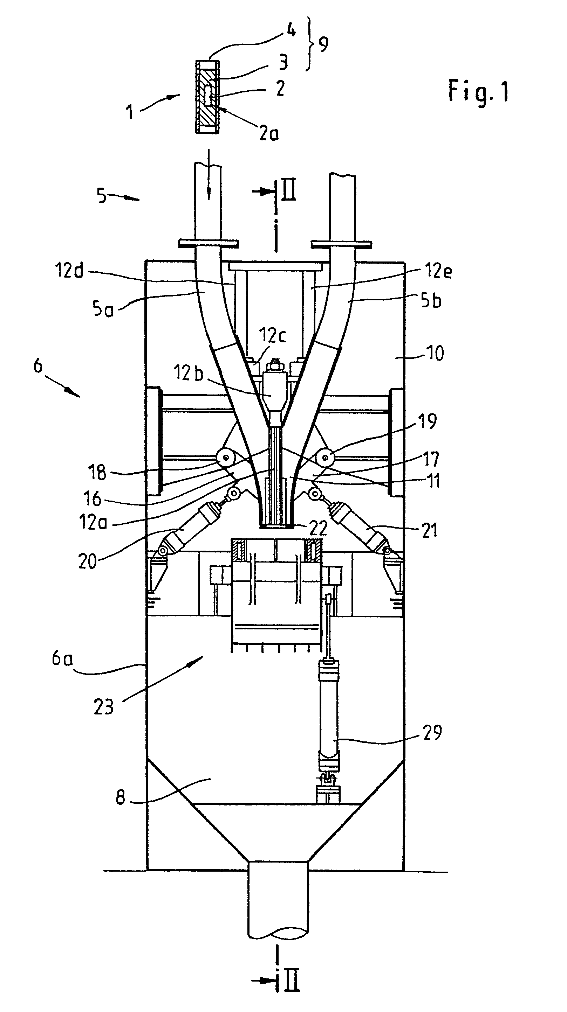

Fig. 1 einen senkrechten Schnitt durch die erfindungsgemäße, beispielsweise senkrecht stehende Vorrichtung,

Fig. 2 einen senkrechten Schnitt durch die Vorrichtung gemäß der Schnittangabe II-II in Fig. 1.

Von einer weiter nicht dargestellten Probenahmestelle (Stahlwerkskonverter, Siemens-Martin-Ofen, Elektroofen) gelangt die Probe 1, die im wesentlichen aus dem Metallprobenkörper 2, einer Keramik-Kokille 3 und einem Papprohr 4 besteht, in die Rohrpostanlage 5, die an die Auspackvorrichtung 6 angeschlossen ist.

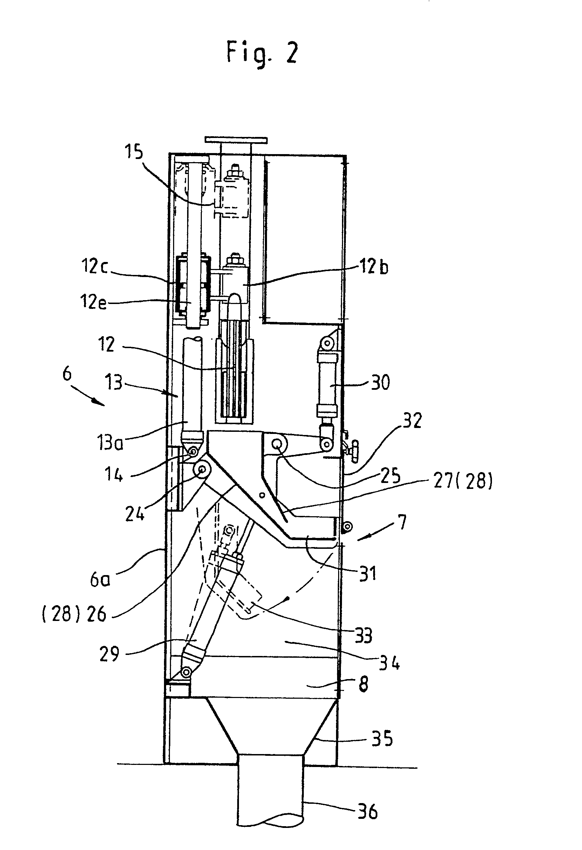

Die Auspackvorrichtung 6 weist einen ersten Ausgang 7 (Fig. 2) für die ausgepackten Metallprobenkörper 2 und einen zweiten Ausgang 8 für die Umhüllungen 9 auf, die aus Teilen der Keramik-Kokille 3 und den weitgehend verkohlten Resten des Papprohres 4 bestehen.

Die Rohrpostanlage 5 mündet mittels der Rohre 5a und 5b am Eingang 10 in den Probenfänger 11. Zwischen die Rohre 5a, 5b greift der Stößel 12a der Ausstoßvorrichtung 12. Der Stößel 12a ist an dem Kopf 12b eingespannt, der selbst an dem Schlitten 12c befestigt ist. Der Schlitten 12c gleitet an den Führungsstangen 12d, 12e auf und ab. Der Antrieb für die Hubbewegung wird durch den pneumatisch betätigten Kolben-Zylinder-Antrieb 13 gebildet, dessen Zylinder 13a mittels des Gelenks 14 am Gehäuse 6a der Auspackvorrichtung 6 angelenkt und dessen Kolbenstange (nicht gezeichnet) am Schlitten 12c angreift. Die obere Stellung 15 des Kopfes 12b des Schlittens 12c ist in Fig. 2 strichpunktiert eingezeichnet.

Der Probenträger 11 besitzt zwei Gehäusehälften 16 und 17, die jeweils um Achsen 18 und 19, die durch das Gehäuse 6a gehalten werden, schwenkbar gelagert sind. An jede der Gehäusehälften 16, 17 sind Kolben-Zylinder-Antriebe 20, 21 mit den Kolbenstangen angelenkt, und die Zylinder stehen mit dem Gehäuse 6a der Auspackvorrichtung 6 in Verbindung. Der Probenfänger 11 weist an den Gehäusehälften 16 und 17 jeweils einen ringförmigen Vorsprung 22 auf, an dem die Reste des Papprohrs 4 hängenbleiben, wenn der Stößel 12a die Keramik-Kokille 3 ausdrückt. Der dann verbleibende Körper gelangt in die Brechvorrichtung 23. Die Brechvorrichtung 23 besteht aus dem schwenkbar um die Achsen 24 und 25 drehbar gelagerten Kanalhälften 26 und 27, von denen eine ortsfest sein kann. Die jeweils bewegliche Kanalhälfte stellt den bewegbaren Brecherbacken 28 dar und bildet die andere Kanalhälfte. Sobald die bewegbare Brecherbacke 28 bzw. die bewegbaren Brecherbacken (26, 27) gegen die Längsseiten 2a Des Metallprobenkörpers 2 mittels der Kolben-Zylinder-Antriebe 29 bzw. 30 gepreßt werden, zerspringt die Keramik-Kokille 3, und der Metallprobenkörper 2 rutscht nach Zurückstellen der jeweiligen Kolbenstangen in den Ausgaberaum 31, der durch die Auffangklappe 32 verschlossen ist. Erst nach Öffnen dieser Auffangklappe 32 ist der noch heiße Metallprobenkörper 2 zugänglich.

Die beiden Kanalhälften 26 und 27 bilden vorteilhafterweise zusammen eine Umlenkung der ansonsten vertikalen Behandlungslinie in die Horizontale, wodurch die Trennung der Ausgänge 7 und 8 zustandekommt.

Bei senkrechter Anordnung der Behandlungslinie fallen die Umhüllungen 9 durch ihre Schwere nach unten. Bei waagerechter Anordnung der Behandlungslinie werden die Umhüllungen 9 bzw. die Keramik-Kokillen 3 mittels Druckluft befördert, und der Metallprobenkörper 2 kann durch seine Schwerkraft befördert werden.

Die untere Kanalhälfte 26 läßt sich mittels des entsprechend angeordneten Kolben-Zylinder-Antriebs 29 bis in die in Fig. 2 strichpunktiert eingezeichnete Freigabestellung 33 schwenken. In dem Bereich 34 der Freigabestellung 33 fallen die Umhüllungen 9 in den Auffangkonus 35 und durch das angeschlossene Abführrohr 36 in einen weiter nicht dargestellten Abfallbehälter.

Eine Behandlung der auszupackenden Proben 1 in einer streng getrennten Folge wird durch die Anordnung in den Rohren 5a und 5b erreicht. Die Schaltung der Kolben-Zylinder-Antriebe 13, 20, 21 und 29 erfolgt mittels kontaktloser Magnetschalter, die durch eine sich in den Rohren 5a, 5b bewegende Probe 1 ausgelöst und nach einem Programm betätigt werden. Eine pneumatische Steuerung der Vorgänge ist ebenfalls möglich.

## Patentansprüche

1. Vorrichtung zur Behandlung von heißen Metall-, insbesondere Stahlproben (1), die mittels eines Manipulators von der Spitze einer Sondenlanze abtrennbar, über eine Rohrpostanlage (5) transportierbar und deren Umhüllungen mechanisch lösbar sind, dadurch gekennzeichnet, daß die Proben (1) über die Rohrpostanlage (5) einer Auspackvorrichtung (6) zuführbar sind, die mit einem Ausgang (7) für die ausgepackten Metallprobenkörper (2) und mit einem weiteren, getrennten Ausgang (8) für eine oder mehrere der Umhüllungen (9) versehen ist.

2. Vorrichtung nach Anspruch 1, dadurch gekennzeichnet, daß in der Auspackvorrichtung (6) am Eingang (10) ein Probenfänger (11) angeordnet ist.

3. Vorrichtung nach den Ansprüchen 1 und 2, dadurch gekennzeichnet, daß in der Auspackvorrichtung (6) dem Probenkörper (11) eine Ausstoßvorrichtung (12) mit einem Stößel (12a) zugeordnet ist, wobei der Stößel (12a) den Probenkörper (11) zentrisch durchdringt.

4. Vorrichtung nach den Ansprüchen 1 bis 3, dadurch gekennzeichnet, daß der Probenfänger (11) aus zwei Gehäusehälften (16, 17) gebildet ist, die jeweils schwenkbar gelagert sind und die in ihrer aufgeklappten Stellung mit ihrer großen Öffnungsweite dem Ausgang (8) gegenüberliegen.

5. Vorrichtung nach den Ansprüchen 1 bis 4, dadurch gekennzeichnet, daß in der Auspackvorrichtung (6) dem Probenfänger (11) eine Brechvorrichtung (23) nachgeschaltet ist.

6. Vorrichtung nach Anspruch 5, dadurch gekennzeichnet, daß die Brechvorrichtung (23) aus einer ortsfesten Kanalhälfte und aus einer bzw. aus mehreren gegen die Längsseiten (2a) der Proben (1) bewegbaren Brecherbacken (28) in Form sich gegenüberliegender Kanalhälften (26 bzw. 27) gebildet ist.

7. Vorrichtung nach den Ansprüchen 1 bis 6, dadurch gekennzeichnet, daß eine untere Kanalhälfte (26) der Brechvorrichtung (23) schwenkbar ist und bis in eine Freigabestellung (33) schwenkbar ist und daß an einen Bereich (34) der Freigabestellung (33) am Ausgang (8) der Auspackvorrichtung (6) ein Auffangkonus (35) mit an diesem anschließenden Abführrohr (36) angeordnet ist.

8. Vorrichtung nach den Ansprüchen 1 bis 7, dadurch gekennzeichnet, daß ein Ausgaberaum (31) der Brechvorrichtung (23) gleichzeitig den Ausgang (8) der Auspackvorrichtung (6) bildet.

9. Vorrichtung nach den Ansprüchen 1 bis 8, dadurch gekennzeichnet, daß der Ausgang (7) der Auspackvorrichtung (6) mit einer Auffangklappe (32) versehen ist.

10. Vorrichtung nach den Ansprüchen 1 bis 9, dadurch gekennzeichnet, daß die Rohrpostanlage (5) mittels eines oder mehrerer Rohre (5a, 5b) an die Auspackvorrichtung (6) angeschlossen ist, wobei die Rohre (5a, 5b) jeweils im Probenfänger (11) münden.

## Claims

1. Appliance for handling hot metal samples (1) especially steel, withrawable by manipulator from the tip of a sampling lance and capable of being conveyed in a pneumatic delivery tube system (5) and having their sheaths stripped by mechanical means, characterized by the samples (1) being conveyable via a pneumatic delivery tube system (5) to a sheath stripping device (6) which features on outlet (7) for the unsheathed metallurgical specimen (2) and a further separate outlet (8) for one or more of the empty sheaths (9).

2. Appliance to Claim 1, characterized by the sheath stripping device (6) featuring a specimen receiver (11) at its inlet (10).

3. Appliance to Claims 1 and 2, characterized by the sheath stripping device (6) having an ejector (12) and a ram (12a) arranged in association with the receiver (11), this ram (12a) acting as central plunger relative to the said receiver (11).

4. Appliance to Claims 1 to 3, characterized by the receiver (11) being formed by two casing halves (16, 17), each slewably mounted in bearings in such manner that their greatest opening width is opposite the outlet (8).

5. Appliance to Claims 1 to 4, characterized by the sheath stripping device (6) having a breaker (23) arranged behind the receiver (11).

6. Appliance to Claim 5, characterized by the breaker (23) consisting of a fixed channel section and of one or more breaker jaws (28) arranged movably against the long sides (2a) of the samples (1) so as to form opposed duct halves (26 and/or 27).

7. Appliance to Claims 1 to 6, characterized by one bottom duct half (26) of the breaker (23) being slewable till a release position (33) whereof one sector (34) features a receiving cone (35) at the outlet (8) of the sheath stripping device (6) so as to end in a discharge tube (36).

8. Appliance to Claims 1 to 7, characterized by a discharge chamber (31) of the breaker (23) at the same time forming the outlet (8) of the sheath stripping device (6).

9. Appliance to Claims 1 to 8, characterized by the outlet (7) of sheath stripping device (6) featuring a retainer flap (32).

10. Appliance to Claims 1 to 9, characterized by the pneumatic delivery tube system (5) being connected by one or more tubes (5a, 5b) to the sheath stripping device (6), these tubes (5a, 5b) in each case ending in the receiver (11).

## Revendications

1. Dispositif pour le traitement d'échantillons chauds de métal, en particulier d'acier (1) détachables de la pointe d'une lance à sonde au moyen d'un manipulateur, transportables par l'intermédiaire d'un système à tube pneumatique (5) et dont les enveloppes peuvent être dégagées mécaniquement, caractérisé en ce que par l'intermédiaire du tube pneumatique (5), les échantillons (1) peuvent être amenés à un dispositif de déballage (6) pourvu d'une sortie (7) pour les échantillons de métal déballés (2) et d'une autre sortie séparée (8) pour une ou plusieurs des enveloppes (9).

2. Dispositif suivant revendication 1, caractérisé en ce que dans le dispositif de déballage (6) un récupérateur d'échantillon (11) est disposé à l'entrée (10).

3. Dispositif suivant les revendications 1 et 2, caractérisé en ce que dans la dispositif de déballage (6) un dispositif éjecteur (12) avec un pilon (12a) est affecté au récupérateur d'échantillon (11), le pilon (12a) traversant centriquement le récupérateur d'échantillon (11).

4. Dispositif suivant les revendications 1 à 3, caractérisé en ce que le récupérateur d'échantillon (11) est formé de deux moitiés de boîtier (16, 17) logées chacune de façon pivotable et placées, en position ouverte, en face de la sortie (8) avec leur grande ouverture.

5. Dispositif suivant les revendications 1 à 4, caractérisé en ce que dans le dispositif de déballage (6) un dispositif broyeur est placé à la suite du récupérateur d'échantillon (11).

6. Dispositif suivant revendication 5, caractérisé en ce que le dispositif broyeur (23) est formé d'une moitié de canal fixe et d'une ou plusieurs mâchoires de broyage (28) sous forme de moitiés de canal (26 ou 27) placées les unes en face des autres, mobiles contre les faces longitudinales (2a) des échantillons (1).

7. Dispositif suivant les revendications 1 à 6, caractérisé en ce qu'une moitié inférieure de canal (26) du dispositif broyeur (23) est pivotable, et pivotable jusque dans une position de libération (33) et qu'à une zone (34) de la position de libération (33), un cône de récupération (35) est disposé, avec ce tube d'évacuation (36), à la sortie (8) du dispositif de déballage (6).

8. Dispositif suivant revendications 1 à 7, caractérisé en ce qu'un compartiment de remise (31) du dispositif broyeur (23) constitue également la sortie (8) du dispositif de déballage (6).

9. Dispositif suivant les revendications 1 à 8, caractérisé en ce que la sortie (7) du dispositif de déballage (6) est pourvue d'un clapet de réception (32).

10. Dispositif suivant les revendications 1 à 9, caractérisé en ce que le système à tube pneumatique (5) est raccordé au dispositif de déballage (6) au moyen d'un ou plusieurs tubes (5a, 5b), les tubes (5a, 5b) débouchant toujours dans le récupérateur d'échantillon (11).

0 057 770

Fig.1

## Fig. 2